# EUROPEAN PATENT APPLICATION

(11) **EP 1 695 939 A1**
(43) Date of publication of application: **30.08.2006**
(21) Application number: 05101456.1
(22) Date of filing: 25.02.2005
(51) Int. Cl.: C02F 1/78, C02F 1/00, C02F 9/00, C02F 1/28, C02F 101/14

(54) **A device and a method for purifying a liquid with ozone and recirculation**

(71) Applicant: HomeFlow Switzerland Distribution SA, 6300 Zug (CH)
(72) Inventor: Tanny, Gerald, 76310, Rehovot (IL); Frenkel, Hella, 44480, Kfar-Saba (IL); Cohen, Avraham, 96956, Jerusalem (IL)
(74) Representative: Hepp, Dieter

(57) **Abstract**

A device (1) for purifying a liquid in particular water (W1) is provided with an ozonating (8) for treatment of said liquid (W1) with ozone (O) and with a storage reservoir (48) hydraulically connected to the ozonation unit. The device (1) is provided with re-circulation means (54, 68, 60) for re-circulating said treated liquid from said storage reservoir (48) through a re-circulation line (66, 69, 61). The re-circulation line (66, 69, 61) is provided with at least one filtration unit (58, 56,).

## Description

The invention relates to a device and a method for purifying a liquid, in particular water, according to the preamble of the independent patent claims.

In many parts of the world, drinking water sources contain microbiological contaminants such as cysts, bacteria, and viruses, in addition to concentrations of inorganic chemical species such as ferrous iron, manganese, hydrogen sulphide, arsenic and fluoride that represent either long term health dangers or aesthetic issues.

Some localities may only treat a part of the problem, or treatment plants cannot be relied upon to consistently deliver drinking water of appropriate standards. If the source water contains significant quantities of organic matter such as humates, sanitation by means of high levels of chlorination may add new toxic chemical contaminants in the form of trihalomethanes (THM's).

The water source may also be a private well for which the user is wholly responsible for the treatment system. However, few private users have the technical knowledge to properly treat and maintain such a source. Thus, a need exists for a simple, point of use, automatic device that is capable of efficiently treating the water to the potable water standards set by the USEPA (United States Environmental Protection Agency), and which is appropriate for use by a private individual or office.

Multistage treatment of water using sediment filters, followed by activated carbon filtration to remove chlorine, followed by reverse osmosis to remove most of the salt, and finally removal of trace organic compounds by activated carbon is known in the art. Because reverse osmosis membranes generally have low rates of water treatment, treated water must be stored in a reservoir and protected from bacterial recontamination. Periodically, this requires sanitation of the reservoir due to bacterial growth and accompanying taste and odor problems. These systems are not suited to operation on non-potable water, unless the treated water reservoir is in addition subjected to chemical sterilization by ozone or dosing with a low level of chloramine.

Point of use chemical sanitation of drinking water is known. Ozone is a preferred chemical as it may be easily generated in-situ, does not form potentially toxic halogenated by-products (THM's), and reverts to molecular oxygen within a short time. Several prior art devices are known.

US 5,683,576 describes an ozone-based water treatment apparatus suitable for residential point of use and point of entry. This comprises a pretreatment filter, a batch ozone reactor (CT chamber), an ozone generator, storage tanks and a micro-controller to treat water. The raw water is passed through a pretreatment filter to the CT where ozone is dissolved in the water to kill bacteria, viruses and other microorganisms. The ozone is manufactured in situ by an ozone generator. Treated water is pumped to a storage tank from which it is drawn on demand. The storage tank is protected from airborne contaminants by a blanket of ozone-enriched air in the gap between the height of the stored water and the top of the storage tank. Water from the CT pours through this blanket as it enters the storage tank. Stored water is re-circulated periodically back to the CT for re-treatment. Such a device has certain drawbacks. When water is re-circulated to the CT for re-treatment, no raw water can be ozonated because the CT is in use. The production efficiency of the device is thus limited. Additionally, this device only addresses removal of microbiological components. Raw water usually contains inorganic pollutants, which also need consideration.

US 6,475,352 B2 describes a household water purifier utilizing ozone injected into a re-circulating system containing a prefilter, main activated carbon filter, water treatment reactor and optionally, a polishing activated carbon filter for filtering the water just prior to dispense. The operation of the system is through a micro-controller and a pump with a system of valves. The water must be circulated a minimum of 3-8 times through the main filter and reactor in order to achieve an appropriate level of microbiological treatment. While this apparatus will remove colloidal particulates (either present initially or generated by oxidation of species during the ozonation process) and organic chemical contaminants, it does not provide an answer to removal of inorganic ions such as arsenic or fluoride that may be present at concentrations that represent a long term health threat. In addition, there is no possibility to store purified water while continuing treatment of raw water.

It is thus an object of the present invention to overcome the drawbacks of the prior art, especially to provide a method and device for purifying a liquid which allows for efficient purification of a liquid such as raw water, in particular in a point of use application. In addition, the device should automatically ensure reliable purification and avoid recontamination in cases where no purified liquid is dispensed for a certain period of time. According to the present invention, these and other objects are solved with a device and a method with the features of the independent patent claims.

The device is basically used for purifying liquids such as potentially nonpotable water from a private well or unreliable public source. It comprises at least one ozonation reaction liquid treatment unit hydraulically connected to the source. The primary function of said ozonation reaction unit is to inactivate microbiological contaminants, which may be present in the raw water. The ozonation reaction unit typically constitutes a batch reactor comprised of a treatment tank, source of ozone gas, sparger for introduction of the gas in the form of small bubbles, appropriate means to control the influx and exit of water as well as its level in the treatment tank, and timer to control the treatment time.

The device is further provided with a storage reservoir, hydraulically connected to the ozonation unit, for storing purified water until it is dispensed by the user. According to the present invention, the device is further provided with re-circulation means for re-circulating the treated liquid from the storage reservoir through a re-circulation line provided with at least one filtration unit. Contrary to the prior art, the treated liquid is not re-circulated from the storage reservoir to the ozonation unit. Rather, it is fed through said filtration unit which is arranged in the re-circulation line, and back to the storage reservoir. Such a design has several advantages. Firstly, it is possible to re-circulate the ozonated liquid from the storage reservoir a plurality of times through said filtration unit in order to remove inorganic pollutants still present in the water after ozonation. This allows optimum use of filter media to be achieved because of the lengthened residence time created by repeated treatment in the filtration unit. Secondly, ozonation treatment of new raw water can be carried out in parallel with a re-circulation cycle, which increases the efficiency of the device as regards its water treatment output per day.

According to a preferred embodiment of the invention, the device is further provided with means for ozonating the liquid in the storage reservoir and/or in the circulation line. If the liquid is ozonated in the storage reservoir, during a re-circulation, dissolved ozone will also be transported through the circulation line as well as any valves, connection members or filter devices arranged therein. Thus, microbiological growth in the components of the hydraulic system and in the filtration unit is inhibited or completely prevented, depending on the frequency and concentration of the ozonation process. While such a ozonation is preferred in the context of a re-circulation unit comprising a filtration unit as mentioned above, ozonating purified liquid in the storage tank is also preferable in the absence of such re-circulation. Especially it can be preferable to ozonate the liquid contained in a storage tank from time to time if no liquid has been dispensed for a certain period of time. By providing an ozonation unit for ozonating raw water and an additional means for ozonating the purified water in a storage reservoir, ozonation of raw water and re-ozonation of the purified water can be carried out in parallel. Re-ozonation therefore does not have any negative influence on ozonation of the raw water in the ozonation reaction unit, or on the daily productivity of the treatment system.

Preferably, at least a part of the re-circulation line forms a part of a hydraulic connection between the ozonation reaction unit and the storage reservoir. It is especially preferred to arrange a filtration unit in the re-circulation line in such a way that ozonated water pumped from the ozonation reaction unit to the storage reservoir will be fed through the filtration unit in the re-circulation line. It is also possible to use different filtration units for transfer and re-circulation. In this way, pollutants can be removed during transfer from the ozonation reaction chamber to the storage reservoir, and upon re-circulation, their concentration can be further reduced with each pass through the filter. The increased contact time between the filter media and the treated water thus allows for the use either of a filter of smaller, less efficient dimensions or for faster treatment by means of a higher re-circulation flow rate.

According to a further embodiment of the invention, the device may be provided with timing and control means for periodically re-circulating liquid through the re-circulation line. In the context of ozonation of the liquid in the storage reservoir, this is especially preferred for preventing re-growth of microbiological contaminants.

Additionally or alternatively, it is also possible to provide the device with pump and control means for automatically re-circulating the liquid until the concentration of pollutants to be removed from the liquid by the filtration unit has fallen below a pre-determinable level. Of course, in one and the same device, there may be both, means for periodically re-circulating the liquid and means for initially re-circulating the liquid until a certain concentration of pollutants is achieved.

In one preferred embodiment, the filtration unit in the re-circulating line is preferably meant for the partial or complete removal of inorganic ions such as arsenides and/or fluorides. It has been found with respect to the trivalent, arsenite, form of arsenic, the ferrous, divalent form of iron, and the trivalent, manganous form of manganese, that ozone treatment of the water in the ozonation reaction unit oxidizes such pollutants to a higher valence level where they can be removed in a subsequent filtration unit. For removal of the resultant, soluble pentavalent arsenate ions, this subsequent filtration unit is preferably an activated alumina filter.

According to a further preferred embodiment of the invention, the re-circulation line may be provided with a further filtration device arranged upstream of the activated alumina filtration unit. This may be preferably a set of micro-fiber-glass and activated carbon block filters. Such filters will remove any colloidal oxides resulting from iron and manganese, as well as dissolved organic molecules. They may also remove potentially carcinogenic bromate ions which may have been formed from bromide ions present in the water during ozonation.

Preferably, the ozonation unit of the present invention is designed for batch wise ozonation of a certain, pre-determined quantity of liquid. This allows for ozonation for a time sufficient to reach the desired treatment level even in case a user should dispense water from the storage tank. In addition, this allows for purifying water and refilling the storage reservoir even in times where no purified water is dispensed.

According to a further preferred embodiment, the device may be provided with a gas conduit between the ozonation reaction unit and the storage reservoir. Excess ozone, which must be allowed to exit from the ozonation reaction unit, may be transferred to the storage reservoir through this conduit. This allows for a particularly simple ozonation in the storage reservoir with one and the same ozone generator. According to this preferred embodiment, the storage reservoir is provided with an activated carbon vent filter for removing ozone from the carrier gas stream (either air or oxygen) which is vented out of the storage reservoir, as it is not desirable from the point of view of user health and safety for large quantities of ozone to enter the immediate area of the water purifier.

According to another preferred embodiment of the invention, the device may be provided with one single ozone generator. This generator can be connected both to the ozonation reaction unit and to the storage reservoir. Appropriate valves may allow for feeding ozone to either or both the ozonation unit and the storage reservoir.

The device according to the invention is preferably provided with a pump for feeding the liquid. The pump may be used primarily for feeding the liquid from the ozonation reaction unit to the storage reservoir. As the liquid will be fed through a filtration unit, it is preferred for the pump to feed the liquid at a constant flow rate.

It is especially preferred to hydraulically connect the pump to the storage reservoir with valve means in such a way that in a first operating mode the pump is adapted to feed a liquid from the ozonation unit to the storage reservoir. In a second operating mode, the pump is adapted for re-circulation of a liquid through a filter unit and the re-circulation line. In a third operating mode, the pump is adapted to feed the purified liquid from the storage reservoir to a dispensing spout. With one and the same pump and by a use of appropriate valves, all liquid feed can be accomplished.

According to a further aspect of the invention, a method for purifying a liquid, in particular water, is provided. In a first step, the liquid is ozonated in an ozonation unit. The ozonated liquid is then transferred to a storage reservoir. Thereby a liquid is preferably fed through at least one filtration unit. In a last step, the liquid is re-circulated from the storage reservoir through a re-circulation line and back to the storage reservoir through at least one filtration unit. Preferably the liquid is fed through the same filtration unit during transfer from the ozonation unit to the storage reservoir and during re-circulation. Appropriate pipes and valves allow for selectively connecting the filtration unit to the re-circulation line or to a transfer line connecting the ozonation unit to the storage reservoir.

The liquid can be re-circulated from time to time, e.g. periodically. Re-circulation preferably is made if a too little quantity of purified water has been dispensed for a pre-determined period of time. Such a re-circulation, combined with periodic ozonation of the storage reservoir, prevents re-growth of bacteria in times of non-use.

Alternatively, it is also possible to re-circulate the liquid after transfer from the ozonation reaction unit for a certain period of time or a certain number of times. Re-circulation is made until the amount of pollutants in the liquid is reduced below a pre-determinable level. This can be measured either directly by measuring a content of pollutants or empirically by re-circulating the water for a certain period of time. Of course, it is possible to initially re-circulate the liquid in order to reduce the amount of pollutants and thereafter to periodically re-circulate the liquid after ozonation of the storage reservoir in order to prevent re-growth of biological material.

According to a further preferred embodiment of the invention, the ozone treated liquid is fed through two-filtration devices, prior to entering the storage reservoir, preferably through an activated carbon block filter for the removal of colloidal particles and dissolved organic matter, followed by an activated alumina filter which is used for removal of inorganic ions such as arsenides or fluorides.

According to a further preferred embodiment, the liquid is ozonated in a batch in the ozonation reaction unit. Therefore, a pre-determined quantity of liquid is treated in the ozonation reaction unit. Said treated quantity of liquid is subsequently fed to the storage reservoir after the ozone treatment. This allows for a continuous batch wise treatment of raw water in the ozonation unit. In parallel, purified water can be dispensed from the storage reservoir.

According to a further preferred embodiment, the purified liquid in the storage reservoir is at least temporarily treated with ozone in the storage reservoir. Such a temporary treatment in addition to ozonation in the ozonation unit avoids re-growth of biological material.

It is especially preferred, to feed excess ozone in the ozonation unit to the storage reservoir. If the amount of ozone is not sufficient, a direct connection may be made between the storage reservoir and an ozone generator.

It is further preferred to remove ozone contained in the gas phase in the storage reservoir from a gas stream exiting from the storage reservoir. For this purpose, the gas stream may be fed through a vent filter. Such a filtered vent avoids contamination of the surroundings of the device with ozone.

Preferably, the liquid is fed through the filtering unit at the constant flow rate. It has been found that by using a constant flow rate, best filtration results may be achieved.

According to the present invention, the liquid may be moved in different paths. In a first operating mode, the liquid may be moved from the ozonation unit to the storage reservoir. For this transfer, a pump, preferably a pump feeding the liquid at a constant flow rate, may be used. In a second operating mode, the liquid is circulated through the filtering unit by said pump. In a third operating mode, the liquid may be dispensed by the same pump. One and the same pump may be used for different purposes if appropriate valves and pipes are used.

It is further preferred to ozonate the storage reservoir liquid either during or immediately prior to re-circulation. Ozone dissolved in the liquid is moved through the filtration unit and/or other components of the re-circulation means. Re-growth of bacteria in the components of the re-circulation means such as valves, pipes or filtration units is thereby prevented.

According to the present invention, it is further preferred to treat the raw water by oxidising pollutants in the liquid during ozonation and to remove the oxidised pollutants in the filtration unit. It has been found that known filtration units utilizating activated alumina show an improved removal efficiency for inorganic pollutants such as arsenides if the raw water has been previously treated with ozone. While this removal principle as such has considerable advantages, it is especially preferred in context with the above mentioned re-circulation, as the removal efficiency is decreased at a pH > 7, and re-circulation can restore some of the lost efficiency seen in a single pass.

According to a further preferred embodiment of the present invention, the apparatus further includes a microprocessor with appropriate software program to place the above-mentioned preferred embodiments in one or more of the following operational modes:
A. Reaction & Storage Mode: - Raw water is treated in the reactor for a predetermined ozone treatment time, after which it is pumped through the filter or filters and stored in the reservoir.
B. Periodic reservoir ozonation & recycle: Water in the reservoir is given an ozone treatment for a predetermined time (reservoir treatment time) while recycling the water from the reservoir through the filters and back to the reservoir.
   The program further allows the user to set both the number of times this treatment is given to the reservoir, and the specific times between treatments.
C. Stagnation Period Ozonation Treatment: If the purifier is not used for a predetermined time, the program automatically ozonates any water in both the reaction chamber and the reservoir for a predetermined time and after predetermined stagnation periods.

Reference will now be made to the drawings which illustrate, by way of example only, a preferred embodiment of the present invention:
- Figure 1: is a diagrammatic illustration of the principle of the present invention,
- Figure 2: is a schematic representation of a device according to the present invention and
- Figures 3a to 3d: different operating modes of the patent invention.

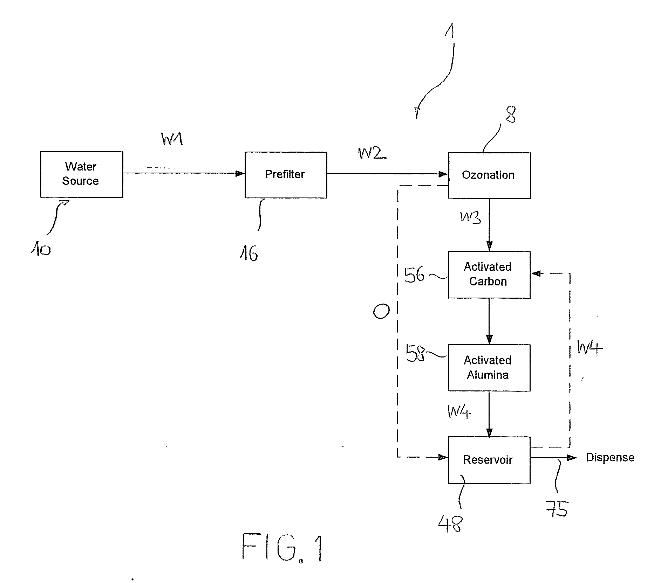

Figure 1 schematically shows the elements of a device 1 for purifying water according to the invention.

Raw water W1 is provided by a water source 10. Particulates and colloidal inorganic matter in the non-potable source water W1 are first pre-filtered by a pre-filter 16. The pre-filter 16 comprises a layer of nominal 1µm microfiberglass followed by an activated carbon block to substantially remove any dissolved or colloidal organic material. Apart from aesthetically treating the water W1 to remove turbidity, by reducing the concentration of organic material present, less ozone will be required in the next stage.

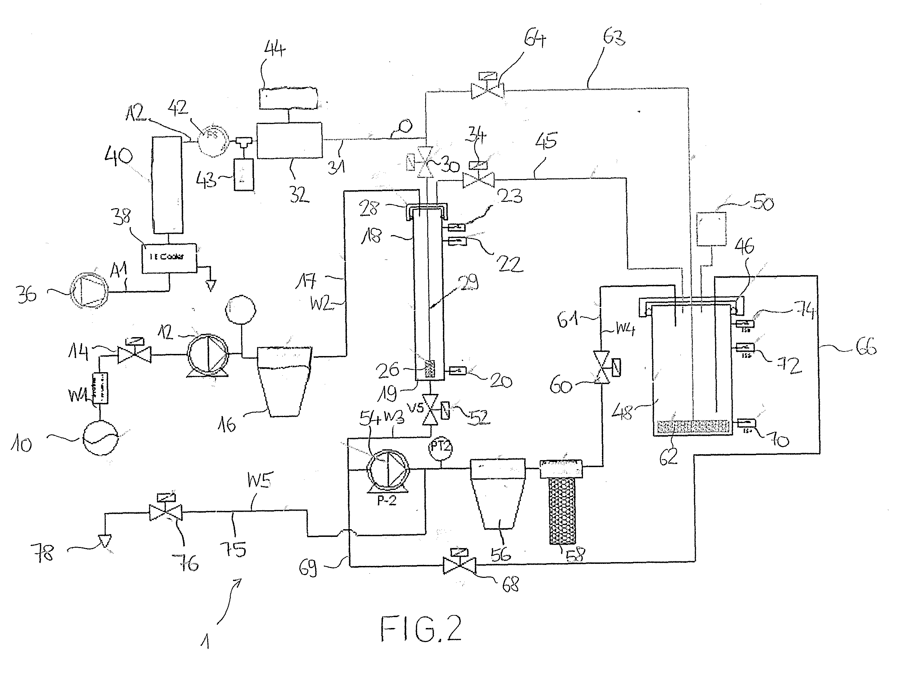

This pretreated water W2 is led into an ozonation arrangement 8 with an ozone generator 32 and an ozonation reaction chamber 18 (see. Figure 2) to sanitize the pretreated water in the ozonation unit 8. As(III+) arsenite is thereby oxidised to the As(V+) arsenate form. The ozonation is carried out batch-wise for some fixed period depending on the production capacity of the ozone generator, the estimated ozone demand, and the ct (Concentration x Time) required to cause a desired reduction of amount of pollutants. For disinfection purposes that meet the USEPA Guide Standard, this is a 4 log reduction of cysts & viruses, and 7 log reduction of bacteria (i.e. a 10⁴ or 10⁷ reaction). Any excess ferrous or manganous ion in the water will also be oxidized to the ferric or manganic state, and form colloidal particles. Since potable water is in the pH range of 6-8.5, ferric or manganic ions are very insoluble in this range of pH and precipitate as their hydroxides, in the form of colloidal particles.

The ozonated, pretreated water W3 is then pumped at a constant flow rate from the ozonation reaction unit 8 through a second set of microfiberglass and activated carbon block filters 56 that remove any colloidal oxides, and dissolved organic molecules, as well as any bromate ion which may have formed from bromide ions present. This is followed by an activated alumina cartridge 58 that removes at least 80% of the As(V+) or the fluoride in a single pass at a constant flow rate. The purified water W4 is then stored in a purified water storage reservoir 48. The reservoir typically may have a volume for 40 litres of purified water.

The purified water storage reservoir 48 and the hydraulic lines for dispense of pure water are maintained in a near sterile condition by periodically bubbling ozone 03 into the reservoir 48 for short periods of time and re-circulating water W4 from the storage reservoir 48 through the microfiberglass and activated carbon filters 56 and the activated alumina column 58, and back to the storage reservoir 48.

The re-circulation flow rate is set depending on the efficiency of the activated alumina column 58, and the estimated number of passes required to reduce the concentration of either the As(V+) or the fluoride ion in the storage reservoir 48 to a concentration allowable by the USEPA standards. This estimate depends on the type and amount of activated alumina media, the diameter and length of the filter, and the volume of the storage reservoir. Thus, it is most easily determined by experimental trial and error for the specific system.

Bubbling ozone into the reservoir is periodically carried out if no water is dispensed for a predetermined period of time, e.g. for four hours. The time of ozonation will depend on the strength of the ozone generator and the specific volume of the reservoir. For example, in 20 litre reservoir, and with a 1g/hour ozone generator, ozonation of the water W4 in the storage reservoir 48 is typically carried out for 10 minutes.

Re-circulation is also carried out initially until the contaminant concentration in the raw water has been reduced to the maximum allowable pollutant concentration. It is also activated during reservoir ozonation periods later on in order to prevent microbiological re-growth in the hydraulic system such as in the carbon and activated alumina filters, in piping, valves or in the storage reservoir 48.

An apparatus suitable for carrying out the above-mentioned method is shown schematically in Figure 2, except for the micro controller with its accompanying software, and electronic circuits that control the operation of the various elements. It is to be understood in the description which follows, that references to sensors activating various operative elements do so via the microprocessor program.

The untreated water source, shown at 10, is connected to a constant flow rate pump 12 which is hydraulically connected in series to a solenoid valve 14 and prefilter cartridge 16. Prefilter 16 consists of an activated carbon block filter, with a nominal pore size of 0.5 micron (KX Industries, USA), wrapped with microfiberglass filter material of nominal 1 micron pore size. This filter is provided either within a disposable plastic housing or as a replaceable filter element within a standard filter housing (Ametek, USA). For a 10" filter element, the pump 12 is typically operated at 2-1/min.

Prefilter 16 is hydraulically connected through a raw water pipe 17 to an ozonation chamber 18, through a lid 28. Ozonation chamber 18 contains a minimum water level switch 20, which activates pump 12 and opens valve 14 whenever the water level is below the switch height. Prefiltered water W2 then enters ozonation reaction chamber 18 until it rises to operate a maximum level switch 22, and/or overflow switch 23, which turn off the pump 12 and close valve 14.

The ozonation reaction chamber 18 typically may have a volume for 4-8 litres of raw water, depending on the ozone generator strength, physical restraints on the design and size of the purifier, and method of injecting the ozone/air mixture into the water in the reaction chamber. It is designed for efficient operation by having a cylindrical shape, with a minimum ratio of height to diameter of 7:1, and preferably 10:1 or more.

At the bottom 19 of ozonation reaction chamber 18 there are means 26 for introducing an ozone / air mixture in the form of fine bubbles. This may be a porous ceramic stone or other means as known in the art. Bubbling means 26 is connected through an ozonation pipe 29 to ozonation solenoid valve 30. The ozonation pipe 29 is integrally sealed in passing through lid 28. An ozone delivery pipe 31 hydraulically connects ozonation valve 30 to an ozone generator 32. After activation of the maximum level switch 22, ozonation solenoid valve 30 is opened, ozone generator 32 is activated and an ozone/air mixture bubbles through means 26 for a pre-determined period, typically 5 - 12 min for a volume of the ozonation reaction chamber 18 of four litres, with a height to diameter ratio of 7. A transfer solenoid valve 34, connected to lid 28, is simultaneously opened to allow excess air and ozone to exit from ozonation reaction chamber 18.

Excess air and ozone from ozonation reaction chamber 18 are led through transfer solenoid valve 34 and transfer pipe 45 through a reservoir lid 46 into the headspace of treated water storage reservoir 48. This gas is vented to atmosphere through a granulated activated carbon (GAC) air filter cartridge 50, arranged in the reservoir lid 46. Granulated activated filter cartridge 50 may be, for example of the type sold by Ametek Ltd for the purpose of air purification.

The ozone generator 32 has an air pump 36, connected in series to a cooling element 38 followed by an air-drying column 40, an air flow switch 42 and a corona discharge tube and power supply 44. The cooling element 38 is a thermoelectrically cooled metal block containing a tortuous flow path for air, whose purpose is to remove excess humidity from ambient air and reduce the air temperature to approximately 10°C. The partially dried, cooled air A1 enters air-drying column 40, which is filled with a hygroscopic media such as Zeochem 4A molecular sieves, or silica gel beads. Air A2 exiting from column 40 has a relative humidity of no more than 5% at a temperature of 20C. A humidity and air temperature sensor 43 inputs data on each of these parameters to the aforementioned micro controller. In the event that the measured values deviate from predetermined values, the micro controller indicates a system fault and disables treatment of water in the ozonation reaction chamber by shutting off power supply 44 and ozonation valve 30. Thus, already treated water in the reservoir 48 may be dispensed for a period of time until the ozone generator would be required for ozonation of the reservoir 48. At this point in time, dispense of water from reservoir 48 would also be disabled.

At the end of the pre-determined ozonation period, the micro controller opens an ozonated water transfer valve 52, which is hydraulically connected between the bottom 19 of ozonation chamber 18 and a constant flow rate pump 54. Activation of pump 54 and opening a reservoir entry valve 60 transfers the water W3 from the ozonation chamber 18 at a constant flow rate through activated carbon filter 56 and activated alumina filter 58. Purified water W4 is transferred through reservoir entry pipe 61 and reservoir lid 46 into treated water reservoir 48. The maximum value of the flow rate of pump 54 is determined by the maximum flow rate allowable to achieve the predetermined levels of reduction of dissolved organic material by filter 56 and reduction of inorganic ions (arsenic or fluoride) by filter 58. The flow rate is typically 1 litre/minute for 10" filter cartridge elements.

The filter 56 is identical in construction to filter 16 described earlier. The activated alumina filter 58 is comprised of a column of activated alumina media, which has been activated prior to use by contacting the filter with a 29 g/L solution of aluminium sulphate for a period of 1 hour. This solution is then flushed out of the filter with pure water prior to installation and use in the apparatus. The physical dimensions of activated alumina filter 58 are dictated by the flow parameters of the re-circulation loop, the pH and concentration of arsenic or fluoride in the source water, and the total volume of water to be treated, e.g. typically, it may be a cylindrical cartridge 60mm in diameter and 500mm in length.

Treated water storage reservoir 48 is provided with a minimum level switch 70, a maximum level switch 72 and an overflow switch 74. An air/ozone bubbler element 62, arranged in the reservoir is connected by reservoir ozonation pipe 63 through lid 46 to a reservoir ozonation valve 64. Valve 64 is hydraulically connected to ozone delivery pipe 31 and thereby to ozone generator 32. At predetermined periods, e.g. four hour intervals , the micro controller activates the ozone generator 32 and reservoir ozonation valve 64, thereby bubbling the ozone/air mixture into treated water reservoir 48.

A reservoir exit pipe 66 extends through lid 46 closing the treated water reservoir 48, to allow water to be withdrawn from reservoir 48. The reservoir exit pipe 66 is hydraulically connected via a reservoir exit valve 68 and a pipe 69 to the intake of pump 54. Dispense of treated water at spout 78 is made through dispense valve 76 and dispense pipe 75, which is connected to the exit of pump 54. When the user manually instructs the micro controller to dispense purified water such as by depressing a button on the purifier, reservoir exit valves 68 and dispense valve 76 are opened, the pump 54 is activated, and water W6 is dispensed at spout 78.

To achieve recycling of water from the reservoir 48 through filters 56 and 58, ozonated water transfer valve 52 and dispense valve 76 remain closed. Reservoir entry valve 60 and reservoir exit valve 68, and pump 54 are activated, and retreated water is returned to reservoir 48 through reservoir entry pipe 61. The time for this re-circulation cycle is predetermined by the value set in the micro-controller.

Ozonation in the storage reservoir and re-circulation is usually made in parallel.

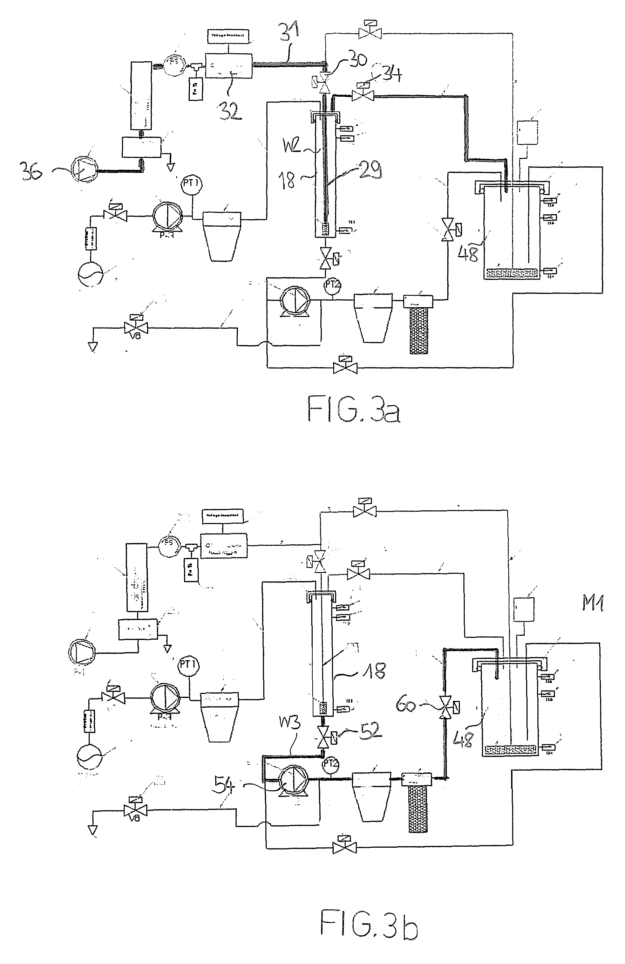

Figures 3a to 3e schematically show different operation modes.

In figure 3a, prefiltered water W2 is ozonated in ozonation reaction chamber 18. For this, ozonation valve 30 is open and air pump 36 is operating. Ozone generated by the ozone generator 32 is fed through ozone delivery pipe 31 and ozonation pipe 29 into the ozonation reaction chamber 18. Figure 3a shows the first ozonation batch. Ozone transfer valve 34 is open. All other valves are closed. As this is the initial batch, no water is contained in the storage reservoir 48.

Figure 3b shows transfer of ozone treated water W3 to the storage reservoir 48 in Mode M1. Ozonated water transfer valve 52 and reservoir entry valve 60 are open and the pump 54 is operating. All other valves are closed.

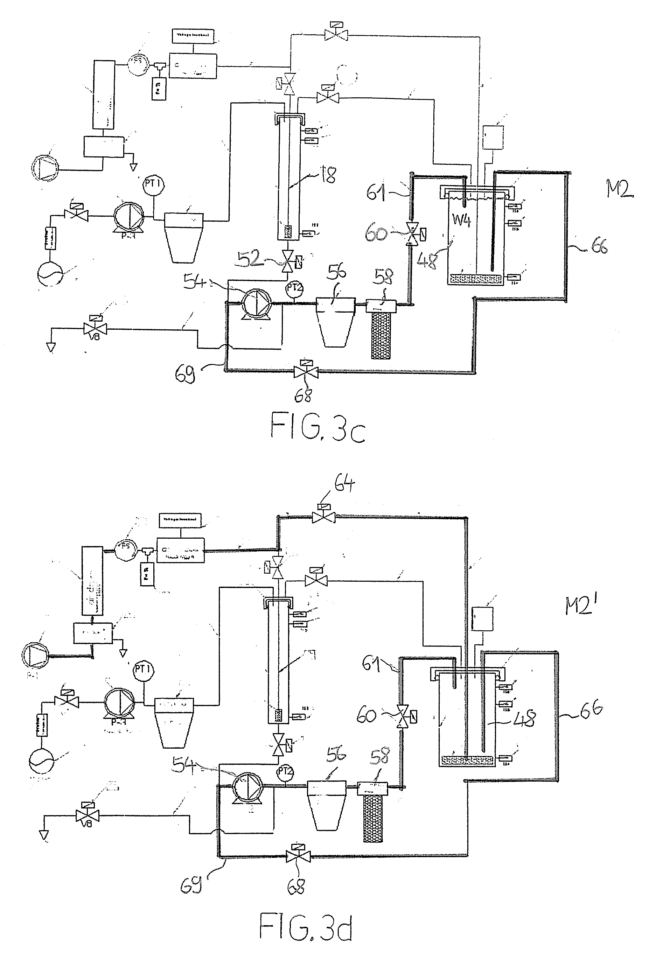

Figure 3c shows another operating mode M2. In this operating mode, the complete contents of the ozonation reaction chamber 18 have been transferred to the storage reservoir 48. In order to achieve repeated treatment of the water through the filters 56 and 58, ozonated water transfer valve 52 is closed and reservoir exit valve 68 and reservoir entry valve 60 are open. Pump 54 is operating such that water is re-circulated from the storage reservoir 48 through a re-circulation line including reservoir exit pipe 66 and reservoir entry pipe 61 as well as pipe 69. In this operating mode, all other valves are closed. It is, however, possible to ozonate in parallel raw water contained in ozonation reaction chamber 18 in a similar way as shown in figure 3a.

Figure 3d shows an alternative re-circulation operating mode M2'. Reservoir exit valve 68 and reservoir entry valve 60 are opened and pump 54 is operating such that water can circulate. As compared to figure 3c, in addition, reservoir ozone delivery valve 64 is open such that ozone enters the storage reservoir 48. Ozone will be dissolved in water contained in the storage reservoir 48 and will be fed through the re-circulation line including reservoir exit pipe 66, reservoir exit valve 68, pipe 69, pump 54, filters 56 and 58 as well as reservoir entry valve 60 and reservoir entry pipe 61. A new batch of raw water could be ozonated in parallel.

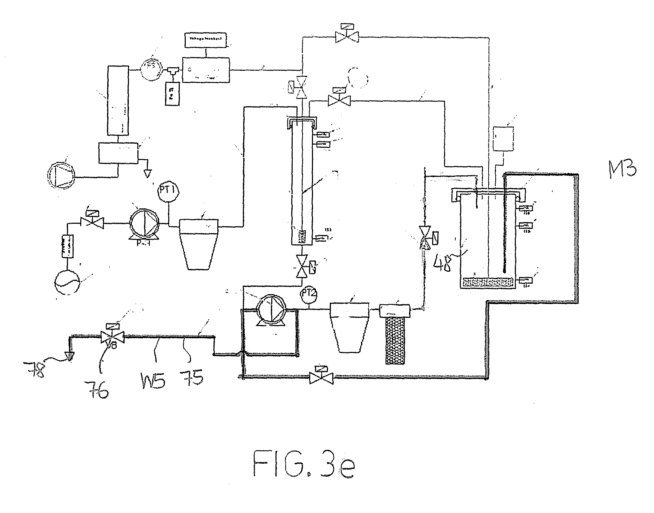

Figure 3e shows dispensing of purified water W5 in another operating mode M3. A new batch of raw water could be ozonated parallel.

## Claims

1. A device (1) for purifying a liquid, in particular, water (W1), that is contaminated with microbiological and/or metal ions that can be oxidized to a higher oxidation state, comprising at least one ozonation unit (8) for treatment of said liquid (W1) with ozone (O) and
a physically separate, treated liquid storage reservoir (48) hydraulically connected to said ozonation unit (8),
wherein the device (1) is provided with re-circulation means (68, 54, 60) for re-circulating said ozone treated liquid (W4) from said storage reservoir (48) through a re-circulation line (66, 69, 61) and
wherein said re-circulation line (66, 69, 61) is provided with at least one filtration unit (58, 56).

2. A device (1), preferably according to claim 1, with at least one ozonation unit (8) for treatment of liquid (W1) with ozone (O) and with a storage reservoir (48) for storing said treated liquid (W4), wherein said device (1) is provided with means (64, 63) for ozonating said liquid (W4) in said storage reservoir (48) and/or in a re-circulation line (66, 69, 61).

3. A device to one of the claims 1 or 2, wherein a part of said re-circulation line (66, 69, 61) forms a part of a hydraulic connection between said ozonation unit (18) and said storage reservoir (48).

4. A device according to one of the claims 1 to 3, wherein the device (1) is provided with means (54) for periodically re-circulating said liquid through said re-circulation line (66, 69, 61).

5. A device according to one of the claims 1 to 4, wherein the device (1) is provided with pump and control means (54) for re-circulating said liquid (W4) until the amount of pollutants to be removed from the liquid (W4) by said filtration unit (56, 58) is below a pre-determinable level.

6. A device according to one of the claims 1 to 5, wherein the filtration unit (58) is adapted for removal of arsenic compounds and/or fluorides.

7. A device according to one of the claims 1 to 6, wherein the filtration unit (58) is an activated alumina filter.

8. A device according to one of the claims 6 or 7, wherein the re-circulation line (66, 69, 61) is provided with a further filtration device (56) arranged upstream of said filtration unit (58), preferably with an activated carbon filter.

9. A device according to one of the claims 1 to 8, wherein the ozonation unit (8) is designed for a batch wise ozonation of a quantity of liquid.

10. A device according to one of the claims 2 to 9, wherein said device is provided with a connection (45) between an ozonation chamber (18) and the storage reservoir (48), wherein excess ozone in said ozonation chamber (18) is transferable to said storage reservoir (48) through said connection (45).

11. A device according to one of the claims 1 to 10, wherein said storage reservoir (48) is connected to an ozone generator (32) by means of a reservoir ozonation connection (63).

12. A device according to one of the claims 1 to 11, wherein said storage reservoir (48) is provided with a vent filter (50) for removing ozone in a gas when gas is vented out of said storage reservoir (48).

13. A device according to one of the claims 2 to 12, wherein the device (1) is provided with one ozone generator (32) connected both to said ozonation chamber (18) and to said storage reservoir (48).

14. A device according to one of the claims 1 to 13, wherein the device (1) is provided with a pump (54) for feeding said liquid from said ozonation chamber (18) to said storage reservoir (48), preferably at a constant flow rate.

15. A device according to claim 14, wherein said pump (54) is hydraulically connected to said storage reservoir (48) with valve means (60, 68, 52, 76) in such a way that
- in a first operating mode (M1) said pump (54) is adapted to feed liquid (W3) from said ozonation chamber (18) to said storage reservoir (48)
- in a second operating mode (M2) said pump (54) is adapted to re-circulate liquid (W4) in a re-circulation line (66, 69, 61) and through said filtration unit (58) and
- in a third operating mode (M3), said pump is adapted to feed purified liquid (WL) from said storage reservoir to a dispensing pipe (78).

16. A device according to one of the claims 1 to 15, wherein the device comprises control means to place the device in at least one of the following operational modes, wherein
- in a reaction and storage mode, raw water is treated in the reactor for a pre-determined ozone treatment time, after which it is pumped through the filter or filters and stored in the reservoir,
- wherein in a periodic reservoir ozonation and recycle mode, water in the reservoir is ozone treated for a predetermined time, whereby water from the reservoir is recycled through the filter and back to the reservoir and
- wherein in a stagnation period ozonation treatment mode, any water in the reaction chamber and the reservoir is ozonated for a pre-determined time and after per-determined stagnation periods if the purifier is not used for a pre-determined time.

17. A method for purifying a liquid, in particular water, comprising the steps of
- ozonating the liquid in an ozonation unit (8)
- transferring the ozonated liquid (W3) to a storage reservoir (48), thereby feeding said liquid through at least one filtration unit (58)
- re-circulating said liquid from said storage reservoir (48) through a re-circulation line (66, 69, 61) and back to said storage reservoir (48) through at least one filtration unit (58) .

18. A method according to claim 17, wherein said liquid is re-circulated from time to time, preferably if a pre-determined quantity of purified water (W6) has not been dispensed for a pre-determined period of time.

19. A method according to claim 17, wherein said liquid is re-circulated until the amount of pollutants to be removed from said filtration unit (58) is reduced below a pre-determinable level or wherein said liquid is re-circulated for a predetermined or pre-determinable period of time.

20. A method according to one of the claims 17 to 19, wherein the ozone treated liquid (W3) is fed through a pre-filtration device (56), preferably through an activated carbon microporous block filter before being fed through said filtration unit (58).

21. A method according to one of the claims 17 to 20, wherein a pre-determined quantity of liquid is ozone treated in said ozonation chamber (18) and wherein the treated quantity of liquid is fed to a storage reservoir (48) after said treatment.

22. A method, preferably according to one of the claims 17 to 21,
wherein
- liquid is ozonated in an ozonation unit (8),
- ozonated liquid (W3) is transferred to a storage reservoir (48),
- the liquid (W4) in said storage reservoir (48) is at least temporarily treated with ozone.

23. A method according to claim 22, wherein excess ozone in said ozonation unit (18) is fed to said storage reservoir (48) at least temporarily.

24. A method according to one of the claims 21 or 22 wherein ozone produced by a ozone generator (32) is fed to said storage reservoir (48) through a reservoir ozonation connection (63).

25. A method according to one of the claims 17 to 24, wherein ozone contained in the gas phase in said storage reservoir (48) is removed from a gas stream exiting from said storage reservoir (48) by passage through a vent filter (50).

26. A method according to one of the claim 17 to 25, wherein the liquid is fed to said filtration unit (58) at a constant flow rate.

27. A method according to one of the claim 17 to 26, wherein
- in a first operating mode (M1) liquid is transferred from said ozonation chamber (18) to said storage reservoir (48) by a pump (54)
- in a second operating mode (M2) liquid is re-circulated through said filtration unit (58) by said pump (54) and
- in a third operating mode (M3) liquid is dispensed by said pump (54).

28. A method according to one of the claims 17 to 27, wherein during re-circulation, liquid containing dissolved ozone is moved through said re-circulation line (66, 69, 61) and/or through said filtration unit (58).

29. A method according to one of the claims 17 to 28, wherein pollutants in the liquid are oxidised during ozonation in the ozonation chamber (18) and wherein oxidised pollutants are removed in said filtration unit (58).

30. A method according to one of the claims 17 to 29, wherein
- in a reaction and storage mode, raw water is treated in the reactor for a pre-determined ozone treatment time, after which it is pumped through the filter or filters and stored in the reservoir,
- in a periodic reservoir ozonation and recycle mode, water in the reservoir is ozone treated for a pre-determined time, whereby water from the reservoir is recycled through the filter and back to the reservoir and
- in a stagnation period ozonation treatment mode, any water in the reaction chamber and the reservoir is ozonated for a pre-determined time and after per-determined stagnation periods if the purifier is not used for a predetermined time.
